Europäisches Patentamt

European Patent Office

Office européen des brevets

(11) Publication number: 0 107 925
A1

# EUROPEAN PATENT APPLICATION

(21) Application number: 83305923.1

(22) Date of filing: 29.09.83

(51) Int. Cl.³: C 12 C 1/04
F 26 B 9/06

(30) Priority: 04.10.82 GB 8228292

(43) Date of publication of application:
09.05.84 Bulletin 84/19

(84) Designated Contracting States:
AT BE CH DE FR IT LI LU NL SE

(71) Applicant: VICKERS PLC
P.O. Box 177 Vickers House Millbank Tower Millbank
London SW1P 4RA(GB)

(72) Inventor: Rockley, Harold James
6 Magnolia Grove Fair Oak
Eastleigh Hants(GB)

(74) Representative: Cole, Paul Gilbert et al,
Hughes Clark Andrews & Byrne 63 Lincoln's Inn Fields
London WC2A 3JU(GB)

(54) Improvements in batch malt kilns.

(57) During a malt kilning process in which batches of malt are kilned in a pair of kilns in overlapping kilning cycles, heated air (7) passes upwards through a kiln floor (1) on which is an earlier received, batch of malt (3), and thence via a transfer duct (8), downwards through a later received batch of malt (10) on kiln floor (2) to discharge at (9). As malting proceeds the air is only partially saturated by passage through batch (3) and passes through duct (8) to the newer malt (10) where it becomes saturated with water vapour. On completion of a cycle, batch (3) is removed and replaced with green malt. Dampers (5) and (6) are operated to reverse the flow whereby kilning of batch (10) is completed and the green malt above floor (1) is dried with partly saturated air via duct (8). Additional heat can be supplied by a heater (11) in duct (8) and additional air through valve-controlled inlets (12) (13) for temperature and air velocity control. Suction and pressure fans can be applied at (9) and (7).

FIG.2

EP 0 107 925 A1

## IMPROVEMENTS IN BATCH MALT KILNS

This invention relates to batch malt kilns and to methods of operating such kilns.

In the past, when deep loaded pressure kilns began to replace lightly loaded, fan assisted natural draught, single and double floor kilns, the loss of malt uniformity due to the increased depth of the batch, and the loss of the high fuel efficiency given by two floor kilns, in which batches were transferred from floor to floor during kilning, was considered acceptable because of the reduced capital cost of the new type of kiln.

Some attempts to recover the lost benefits were made by using kilning air flow reversal to correct the loss of uniformity on an early pressure kiln, but the cost of the complex ducting and dampers found necessary outweighed the benefits then obtained. Studies also revealed that difficulties would arise if batches were transferred between deeply loaded kilns during kilning. One object of the invention is, therefore, to provide a malt kilning assembly that overcomes these disadvantages.

According to the invention a malt kilning assembly comprises a malt kilning assembly comprising two malt kilns and a heated air circulation system arranged for performing a continuing series of overlapping kilning operations and including conduits whereby the heated air is conveyed, when the assembly is in operation, first upwards through an earlier received batch of malt in one kiln and then downwards through a later received batch of malt in the other kiln, and means whereby the direction of flow is reversed when the earlier received batch of malt has been replaced by a third batch of green malt so that the heated air flows first upwards through said later received batch in said other kiln and then downwards through the said batch of green malt in said one kiln.

The invention also provides a method of kilning malt comprising:

introducing into one and the other alternately of a pair of malt kilns successive batches of malt to be kilned in a continuing series of overlapping kilning operations;

passing heated air upwards through one kiln in which is the earlier received batch of malt;

passing air unsaturated with water vapour from said one kiln in which is the batch of earlier received malt downwardly through another kiln in which is a later received batch of malt and thence to exhaust;

on completion of one kilning operation replacing the dry batch of earlier received malt in said one kiln with green malt; and

reversing the direction of heated air flow in the next following kilning operation so that air now flows upwards through said later received batch of malt in said other kiln and thence downwards through said green malt in said one kiln and thence to exhaust.

Therefore, the present invention applies when two separate kilning floors are required in a malting installation, because the successive batches of malt produced have kilning periods which overlap. It consists of a novel system and method of circulating kilning air through and between successive batches. The system provides a constantly saturated exhaust air condition from the two kilns, in the same way as did the old two floor kilns, and thus matches their efficiency, but it avoids the need to transfer the batches while they are being kilned. This can be done by means of ducting and dampers in a way which also causes the air flow through each batch to be reversed at the end of each kilning cycle. The system thus gives increased uniformity in the finished batches of malt and an additional advantage of protecting the complex machinery, needed to load large modern kilns, from the saturated atmosphere which occurs in such kilns, during the early stages of kilning. It also gives exhaust conditions which help when exhaust heat recovery equipment is required.

In order that the invention may be clearly understood and readily carried into effect systems in accordance therewith will now be described, by way of example, with reference to the accompanying drawings, in which:-

Figure 1 is a diagrammatic sectional elevation of two malt kilns with a common heated air circulating system shown in one phase of its operation;

Figure 2 is similar to Figure 1 but shows the system in a second phase of its operation, and

Figures 3 and 4 are diagrammatic sectional elevations of modifications of the arrangement shown in Figures 1 and 2.

Where equivalent features appear in different drawings, the same reference numeral is applied to those features.

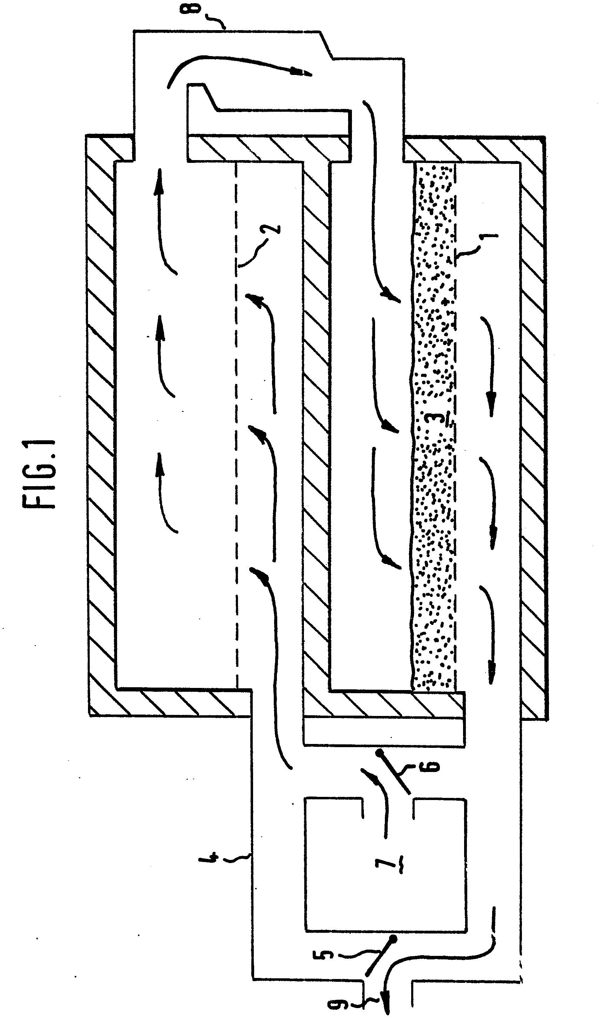

Figure 1 shows the mode of operation of an air circulating system at the start of a sequence of overlapping kilning operations when the lower one of two separately enclosed perforated kiln floors 1 and 2 has just received the first of a series of batches of malt 3. A supply and exhaust kilning air ducting system 4, with change-over dampers 5 and 6 circulates air 7, heated to kilning temperature, firstly upwards through the unloaded kiln floor 2 and then via a transfer duct 8 downwards through the first batch of malt 3, before being exhausted to atmosphere at 9. It will be noted that the ducts for admitting or removing kilning air open into the space below the kilning floors 1, 2 and that the transfer duct 8 communicates spaces above the kilning floors 1, 2.

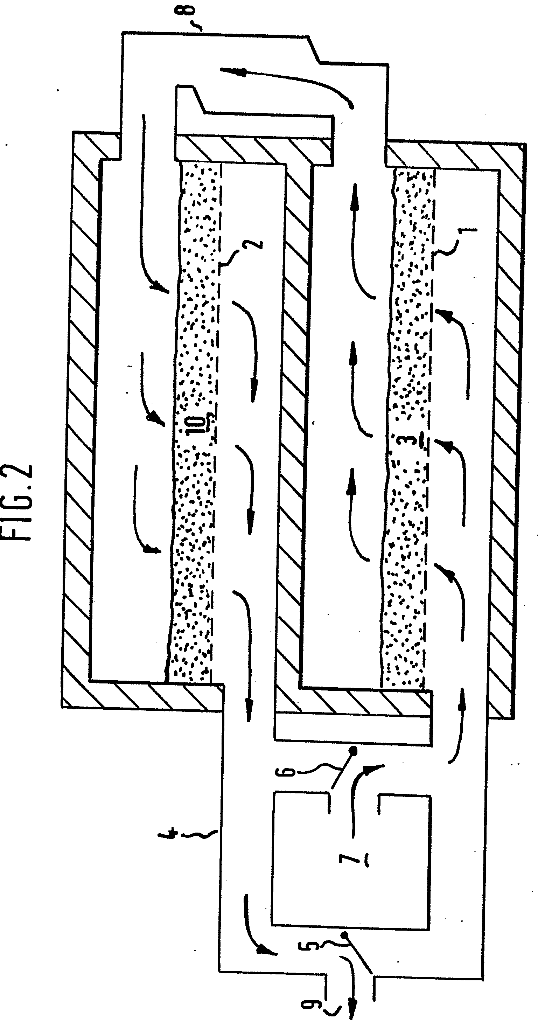

Kilning of the first batch continues in the way described above until the second batch of malt 10 is ready to be loaded. At this time the positions of the change-over dampers 5 and 6 are changed to the positions shown in Figure 2 and the second batch of malt 10 is loaded on to the empty kiln floor 2.

Figure 2 indicates how the route of the heated kilning air 7 in the system is changed so that air now firstly flows up through kiln floor 1 and batch 3 and with the direction reversed in transfer duct 8, so that it passes downwards through batch 10 on kiln floor 2 before being exhausted to atmosphere 9 as before.

When the kilning of the batch on kiln floor 1 is complete, the change-over dampers 5 and 6 are changed back to the position indicated in Figure 1, and kiln floor 1 is emptied. Thereafter successive batches are received alternately by kiln floors 1 and 2 with the change-over dampers being switched on each occasion so that the air always flows first upwards through the earlier received batch of malt and downwards through the kiln in which is the later received malt and thence to exhaust.

The method and system requires kilning air temperature and flow rate to be regulated so that by the time the air flow through a batch is reversed from the downward to the upward direction, the air leaving that batch is no longer saturated and its temperature begins to rise so that it does sufficient drying of the succeeding batch to enable the system as a whole to kiln the malt batches in the desired manner. This form of control is sufficient for many two floor kilns.

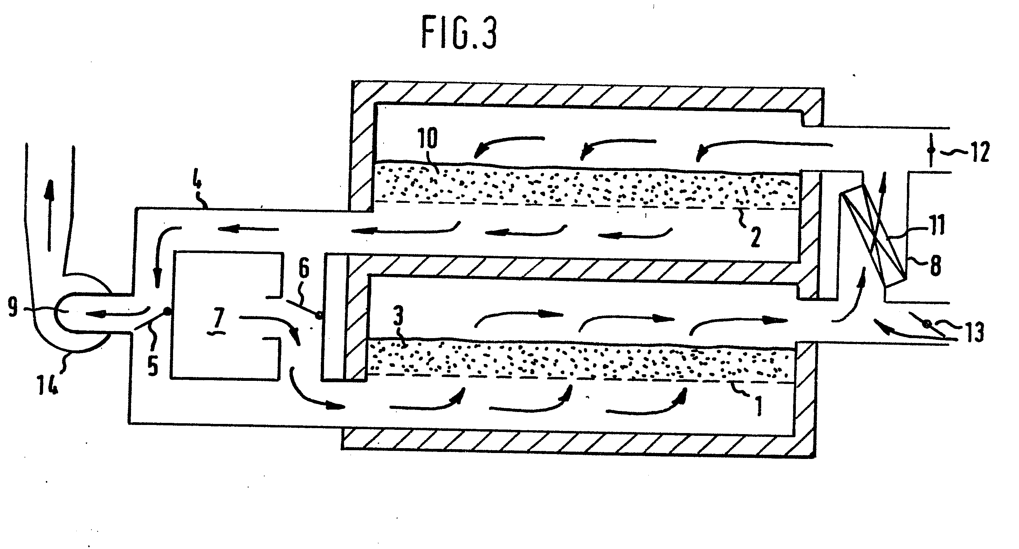

If malts are to be produced which make this practice difficult, then Figure 3 indicates an extension to the system where the by-pass duct 8 is provided with an air heater 11 and additional air inlets and control dampers 12 and 13. These enable the air passing from one batch to another to be heated or cooled and also enable the flow rate of air passing through a batch during the second phase of kilning to be less than that passing through the batch during the first phase while maintaining temperature control. Thus as shown in Figure 3, air after rising through the earlier received lower batch 3 can have comparatively cold air added by way of the damper 13 (while damper 12 is kept shut). This not only cools the air stream but also, as a result of the increased volume, reduces the rate of flow through the later received batch 10 in relation to that through the batch 3. Whether or not the damper 13 is opened the air stream passing between the two batches can be heated by the heater 11.

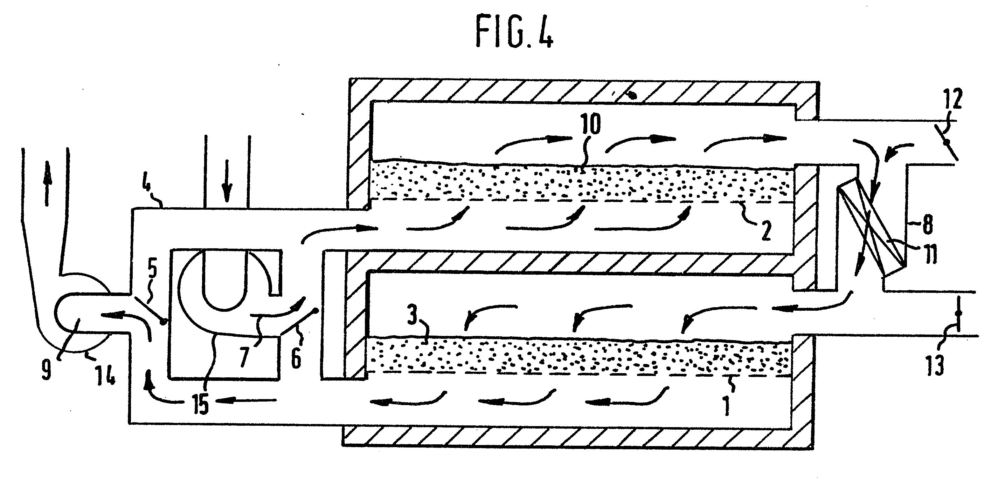

Figure 4 shows the alternative phase wherein the air rising through the (later received) upper batch 10 is cooled by air entering past damper 12 (while damper 13 is kept shut).

In the form shown in Figure 3, the system has the advantage that providing it is practical to create a negative pressure in the system, only a single fan 14 is needed to circulate the kilning air. Where conditions give rise to an excessively high initial system resistance without however preventing entry of air past dampers 12 and 13, Figure 4 shows how this can be alleviated by introducing a secondary fan 15 at the point where the heated kiln air enters the system to reduce the load on the main fan 14.

Figures to 4 are diagrammatic and are not intended to imply that the two kiln floors need to be in a common structure or one above the other.

CLAIMS:

1.    A malt kilning assembly comprising two malt kilns (1,2) and a heated air circulation system arranged for performing a continuing series of overlapping kilning operations and including conduits (4, 8, 9) whereby the heated air (7) is conveyed, when the assembly is in operation, first upwards through an earlier received batch of malt in one kiln (3) and then downwards through a later received batch of malt (10) in the other kiln (2), and means (5, 6) whereby the direction of flow is reversed when the earlier received batch of malt (3) has been replaced by a third batch of green malt so that the heated air flows first upwards through said later received batch (10) in said other kiln (2) and then downwards through the said batch of green malt in said one kiln (1).

2.    An assembly according to Claim 1, in which each kiln (1, 2) comprises an enclosed perforated kiln floor mounted over a lower  space open at one end of the kiln to valve controller means (5, 6) for alternately admitting heated air to the said space and discharging air from the said space, an upper space above the floor for accommodating a malt batch being open at the other end of the kiln to a transfer duct (8) leading to the upper space above the floor in the other kiln.

3.    An assembly according to Claim 1 or Claim 2 in which the kilns (1, 2) are located one on top of the other.

4.    An assembly according to any one of the preceding claims, provided with a heater (11) for additionally heating the air as it flows from the later to the earlier received batch of each kilning operation.

5.    An assembly according to any one of the preceding claims, provided with valve controlled means (12, 13) for admitting additional air to the air circulation as it flows from the later to the earlier received second batch as well as when it flows in the reverse direction between the second and first batches.

6.    An assembly according to any one of the preceding claims, provided with a fan (14) for exhausing the circulating air from the assembly after the air has passed through the kilns (1, 2).

7. An assembly according to any one of the preceding claims, provided with a fan for feeding the heated air into the circulating system.

8. A method of kilning malt comprising:

introducing into one and the other alternately of a pair of malt kilns (1, 2) successive batches of malt (3, 10) to be kilned in a continuing series of overlapping kilning operations;

passing heated air (7) upwards through one kiln (1) in which is the earlier received batch (3) of malt;

passing air unsaturated with water vapour from said one kiln (1) in which is the batch of earlier received malt (3) downwardly through another kiln (2) in which is a later received batch of malt (10) and thence to exhaust (9);

on completion of one kilning operation replacing the dry batch of earlier received malt (3) in said one kiln (1) with green malt; and

reversing the direction of heated air flow in the next following kilning operation so that air now flows upwards through said later received batch of malt (10) in said other kiln (2) and thence downwards through said green malt in said one kiln (1) and thence to exhaust (9).

9. A method according to Claim 8, in which the air is additionally heated as it passes from one kiln floor to the other kiln floor.

10. A method according to Claim 8 or Claim 9, in which additional air is added to the circulating air as it passes from one kiln floor to the other kiln floor.

# FIG.1

0107925

# FIG.2

0107925

FIG.3

FIG.4

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-C- 884 024 (A. STEINECKER MASCHINENFABRIK AG) * Figures; claims; page 1, line 32 - page 2, line 83 * | 1-3,5-8 | C 12 C 1/04 F 26 B 9/06 |
| Y | | 1-5,7-9 | |
| X | FR-A- 886 660 (I. SOUBBOTINE) * Summary; figures; page 1, lines 1-4; page 1, line 51 - page 2, line 83 * | 1,2,7, 8 | |
| X | GB-A-1 478 991 (REDLER CONVEYORS LTD.) * Figures; claims * | 1,7,8 | |
| Y | DE-A-2 834 674 (C. SEEGER MASCHINENFABRIK GmbH) * Figures; claims; page 6 * | 1-5,7-10 | C 12 C F 26 B |
| Y | FR-A- 633 514 (DIEBOLD et CIE.) * Figure 4; page 2, lines 27-38 * | 1-5,7-10 | |

TECHNICAL FIELDS SEARCHED (Int. Cl. 3)

The present search report has been drawn up for all claims

| Place of search | Date of completion of the search | Examiner |
|---|---|---|
| THE HAGUE | 26-01-1984 | COUCKE A.O.M. |